# EUROPÄISCHE PATENTSCHRIFT

(11) **EP 1 733 906 B1**
(45) Veröffentlichungstag und Bekanntmachung des Hinweises auf die Patenterteilung: **03.08.2011**
(21) Anmeldenummer: 06020366.8
(22) Anmeldetag: 20.11.2001
(51) Int. Cl.: B60H 1/32, B60H 1/00

(54) **Klimaanlage für ein Kraftfahrzeug**
Air conditioning for a motor vehicle
Dispositif de climatisation pour véhicule automobile

(30) Priorität: 05.01.2001 DE 10100252; 15.09.2001 DE 20115273 U; 15.09.2001 DE 10145658; 18.10.2001 DE 10150896
(43) Veröffentlichungstag der Anmeldung: 20.12.2006
(62) Teilanmeldung aus: 01127612.8
(73) Patentinhaber: Behr GmbH & Co. KG, 70469 Stuttgart (DE)
(72) Erfinder: Bureau, Cathy, Birmingham, MI 48009 (US); Burk, Roland, 70469 Stuttgart (DE); Dürr, Gottfried, 70437 Stuttgart (DE); Feuerecker, Günther, 70567 Stuttgart (DE); Molt, Kurt, 74321 Bietigheim-Bissingen (DE); von Rappard, Gerald, 50823 Köln (DE); Seewald, Wolfgang, 70190 Stuttgart (DE); Taxis-Reischl, Brigitte, 70499 Stuttgart (DE); Weinbrenner, Marcus, 70839 Gerlingen (DE)
(74) Vertreter: Grauel, Andreas

(56) Entgegenhaltungen:
- EP-A- 0 995 621
- EP-A2- 0 921 365
- DE-A- 10 124 757
- DE-A- 19 729 497
- FR-A1- 2 793 546
- US-A- 3 128 608
- US-A- 5 644 929
- US-A- 5 910 159
- US-A- 6 016 662

## Beschreibung

Die Erfindung betrifft einen Verdampfer für Kältemittel.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel, oder in anderen Fahrsituationen, bei welchen eine Antriebsleistung des Antriebsmotors zumindest vorübergehend nicht benötigt wird. Dieses vorübergehende Abschalten des Motors wird auch Idle-stop-Betrieb genannt. Solche Maßnahmen werden zumindest teilweise bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist unter anderem ein Grund warum derartige Fahrzeuge nicht mit einer Klimaanlage ausgerüstet sind, denn bei Motorstillstand kann auch ein für eine Klima-anlage notwendiger Kompressor nicht angetrieben werden, so dass im Idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das bei Abkühlen von feuchter Luft anfallende Kondensat zu vereisen, so dass im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, dass bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so dass diese bekannte Klimaanlage erst nach einer relativ langen Fahrzeit im Idle-stop-Betrieb arbeiten kann. Ein weiteres Problem ist, das in der Regel der Verdampfer ungleichmäßig vereist, so dass der Verdampfer vereiste und nicht vereiste Bereiche aufweist. Des weiteren kann die Vereisung so stark sein, dass die Luft durch den Verdampfer nicht oder nur mit hohem Druckverlust strömen kann. In jedem Fall erzeugt die Eisschicht einen luftseitigen Druckverlust, was zu einer erhöhten Gebläse-leistung führt.

Weiterhin ist die US 6,016,662 bekannt, bei welcher ein Speicher mit einem Sepentinenverdampfer offenbart ist.

Ausgehend von diesem Stand der Technik ist es Aufgabe der Erfindung einen verbesserten Verdampfer zu schaffen, welcher in vielen bzw. im wesentlichen allen Betriebs- und Umgebungsbedingungen einschließlich der Idle-stop-Situation bei abgeschaltetem Antriebsmotor des Fahrzeuges zumindest anfänglich eine Klimatisierung des Fahrzeugs gewährleistet.

Diese Aufgabe wird gelöst durch einen Verdampfer gemäß Anspruch 1.

Vorteilhaft ist gemäß einer ersten Lösung ein zusätzlicher zweiter Verdampfer zum Abkühlen der Luft vorgesehen, wobei dieser Verdampfer zusätzlich ein Kältespeichermedium (Latentkältespeicher) enthält. Dieser zweite Verdampfer kann dann beladen werden, wenn ausreichend Kälteleistung zur Verfügung steht, beispielsweise im gewöhnlichen Fahrbetrieb, wobei das Kältespeichermedium auf die Speicherung von Kälte optimal abgestimmt sein kann. Im Idle-stop-Betrieb wird dann die Luft durch diesen zweiten Verdampfer abgekühlt. Dieser zweite Verdampfer bildet somit eine Kombination aus Kältespeicher und Verdampfer und wird im nachfolgenden auch Speicherverdampfer genannt. Um die maximale Kälteleistung zu erbringen (Pull-down-Betrieb), kann die Luft ferner über beide Verdampfer geleitet werden.

Gemäß einer zweiten Lösung ist der Verdampfer in wenigstens zwei Teilbereiche aufgeteilt, wobei ein erster Teilbereich ausschließlich als Kältemittelverdampfer wirken kann und ein zweiter Teilbereich zusätzlich ein Kältespeichermedium enthält. Der zweite Teilbereich des Verdampfers hat damit im wesentlichen die gleichen Eigenschaften wie der oben erwähnte Speicherverdampfer der ersten Lösung. In dieser zweiten Lösung sind somit die Funktionen des Verdampfers im Fahrbetrieb und des Speicherverdampfers im Idle-stop-Betrieb in einen einzigen Verdampfer, also ein einziges Bauteil, integriert. Auch hierbei kann, um die maximale Kälteleistung zu erbringen, die Luft als dritte Möglichkeit auch über beide Verdampfer geleitet werden.

Bevorzugt sind der Speicherverdampfer bzw. der Speicherbereich kältemittelseitig parallel zu dem ersten Verdampfer bzw. ersten Teilbereich geschaltet, so dass wahlweise die Kälteleistung dem ersten oder zweiten Verdampfer bzw. Teilbereich zugeführt werden kann. Dabei ist der Kältemitteldurchfluss durch den Speicherverdampfer bzw. den zweiten Teilbereich durch ein Ventil regelbar.

Alternativ ist auch eine Reihenschaltung der Verdampfer bzw. Teilbereiche möglich.

Wenn die beiden Verdampfer bzw. die beiden Teilbereiche des Verdampfers luftseitig parallel geschaltet sind, kann die abzukühlende Luft entweder durch beide Verdampfer bzw. Teilbereiche oder auch nur durch einen geführt werden. Im Idle-stop-Betrieb kann dann beispielsweise während der Fahrt, wenn der Motor läuft, die Luft durch den ersten Verdampfer bzw. Teilbereich abgekühlt werden und bei abgeschaltetem Motor die Luft durch den Speicherverdampfer bzw. zweiten Teilbereich abgekühlt werden. Die Umschaltung der Luftströmung kann durch ein vor dem Verdampfer angeordnetes Luftstromsteuerelement realisiert sein.

Vorzugsweise liegt der Schmelzpunkt des Kältespeichermediums etwas über 0° C, wobei das Kältespeichermedium insbesondere Decanol (Schmelzpunkt 7°C) oder Tetradecan (Schmelzpunkt 6°C) ist oder enthält. Derartige Kältespeichermedien sind auch für andere Speicherverdampfer und/oder andere Schaltungen verwendbar.

In einer kostengünstigen Ausführung ist das Kältespeichermedium ein Wasser-Glysanthin-Gemisch.

Wenn die beiden Verdampfer bzw. die beiden Teilbereiche des Verdampfers luftseitig parallel geschaltet sind, kann die abzukühlende Luft entweder durch beide Verdampfer bzw. Teilbereiche oder auch nur durch einen geführt werden. Im Idle-stop-Betrieb kann dann beispielsweise während der Fahrt, wenn der Motor läuft, die Luft durch den ersten Verdampfer bzw. Teilbereich abgekühlt werden und bei abgeschaltetem Motor die Luft durch den Speicherverdampfer bzw. zweiten Teilbereich abgekühlt werden. Die Umschaltung der Luftströmung kann durch ein vor dem Verdampfer angeordnetes Luftstromsteuerelement realisiert sein.

In vorteilhafter Weise ist ein Frischluft- und auch ein Umluftbetrieb möglich, so dass beispielsweise bereits abgekühlte Luft im Innenraum wieder rezirkuliert werden kann, wodurch Kälteleistung eingespart werden kann.

In einer möglichen Ausführungsform des Speicherverdampfers bzw. zweiten Teilbereichs können dessen Verdampferrohre für die Kältemittelführung als Mehrkanalrohre ausgebildet sein, wobei in einzelnen Kanälen das Kältespeichermedium gelagert sein kann.

Weiterhin wird die Aufgabe gelöst durch die Merkmale des Anspruches 1, insbesondere dadurch, daß zumindest einzelne Kältemittelrohre mit zumindest einem Speicher für Kältespeichermedium in thermischer Verbindung stehen.

Dabei ist es zweckmäßig, wenn zumindest ein Kältemittelrohr derart angeordnet ist, daß zumindest auf der einen Seite des Kältemittelrohrs ein Speicher für ein Kältespeichermedium angeordnet ist. Gemäß einer Ausführungsform der Erfindung ist es zweckmäßig, wenn daß ein Speicher nur einseitig des Kältemittelrohrs angeordnet ist. Gemäß einer weiteren erfindungsgemäßen Ausgestaltung können Speicher beidseitig des Kältemittelrohrs angeordnet sein. Auch kann der Speicher an seiner einen Seitenfläche mit dem Kältemittelrohr in Verbindung steht und auf der anderen seiner Seitenflächen mit einer Rippe in Verbindung steht. Weiterhin kann das Kältemittelrohr an seiner einen Seitenfläche mit einem Speicher in Verbindung steht und auf der anderen seiner Seitenflächen mit einer Rippe in Verbindung steht.

Erfindungsgemäß können die Bauteile des Wärmetauschers in Richtung quer zur Luftsrömungsrichtung durch den Wärmetauscher derart angeordnet sein, daß die Reihenfolge der Anordnung wie folgt ist: Kältemittelrohr, Speicher, Rippe, Kältemittelrohr, Speicher, Rippe. Bei einem weiteren erfindungsgemäßen Ausführungsbeispiel können die Bauteile des Wärmetauschers in Richtung quer zur Luftsrömungsrichtung auch durch die Reihenfolge der Anordnung gekennzeichnet sein: Kältemittelrohr, Speicher, Rippe, Speicher, Kältemittelrohr, Speicher, Rippe, Speicher, Kältemittelrohr. Bei einem anderen Ausführungsbeispiel der Erfindung kann es zweckmäßig sein, wenn die Bauteile des Wärmetauschers in Richtung quer zur Luftsrömungsrichtung durch den Wärmetauscher gekennzeichnet ist durch die Reihenfolge der Anordnung: Kältemittelrohr, Rippe, Speicher, Rippe, Kältemittelrohr, Rippe, Speicher, Rippe, Kältemittelrohr.

Besonders zweckmäßig ist es, wenn zumindest ein Speicher und zumindest ein Kältemittelrohr miteinander verbunden sind, wie beispielsweise verlötet, formschlüssig verbunden oder ähnliches. Ebenfalls kann es zweckmäßig sein, wenn zumindest ein Speicher und zumindest ein Kältemittelrohr einteilig ausgebildet sind, also die beiden Elemente Teil eines Bauteiles sind, sie somit integraler Bestandteil des Bauteiles sind.

Weitere vorteilhafte Ausführungen werden durch die Unteransprüche weitergebildet. Diese können jedoch auch für sich betrachtet selbständige Erfindungen darstellen.

Im folgenden wird die Erfindung anhand von Ausführungsbeispielen unter Bezugnahme auf die Zeichnung näher erläutert. Dabei zeigt:
- Fig. 1: ein schematisches Blockschaltbild eines Kältemittelkreislaufs einer Klimaanlage gemäß einem ersten Ausführungsbeispiel,
- Fig. 2: einen stark schematisiert dargestellten Teil einer Klimaanlage mit Verdampfer,
- Fig. 3: ein schematisches Blockschaltbild eines Kältemittelkreislaufs einer Klimaanlage gemäß einem weiteren Ausführungsbeispiel,
- Fig.4: einen schematisch dargestellten Verdampfer gemäß einer alternativen Ausführungsform,
- Fig. 5: eine Darstellung von Einzelheiten bzw. Bauteilen eines Verdampfers,
- Fig. 6: einen Verdampfer,
- Fig. 7: einen Verdampfer,
- Fig. 8: einen Schnitt durch einen Teil eines Verdampfers,
- Fig. 9: einen Schnitt durch einen Teil eines Verdampfers,
- Fig. 10: einen Schnitt durch einen Teil eines Verdampfers,
- Fig. 11: einen Querschnitt eines Verdampferrohres zur Käftemittelführung und
- Fig. 12: einen Querschnitt eines Verdampferrohres zur Kältemittelführung.

Eine erfindungsgemäße Klimaanlage 210 umfasst einen Kältemittelkreislauf 212, in dem ein Kompressor 214, ein Kältemittelkondensator 216, ein Kältemittelsammler 218, ein Expansionsventil 220 und ein Verdampfer 222 über Kältemittelleitungen 224, 226, 228, 230 miteinander verbunden sind

Kältemittelseitig parallel zu dem ersten Verdampfer 222 ist ein zweiter Verdampfer 232 in den Kältemittelkreislauf 212 eingebunden, wobei von der Kältemittelleitung 226 eine Kältemittelleitung 234 abzweigt, die nach dem ersten Verdampfer 222 in die Kältemittelleitung 230 mündet. Vor dem zweiten Verdampfer 232 ist ein Expansionsorgan 236 und ein Absperrventil 238 in der Kältemittelleitung 234 angeordnet. Über das Absperrventil 238 kann der Kältemitteldurchfluss durch den zweiten Verdampfer 232 gesperrt werden. Ebenso ist nach dem ersten Verdampfer 222 ein Absperrventil 240 vorgesehen, so dass auch der Kältemitteldurchfluss durch den ersten Verdampfer 222 absperrbar ist.

Der erste Verdampfer 222 kann in nicht näher dargestellter Weise in bekannter Weise aufgebaut sein. So kann es sich beispielsweise um einen Flachrohrverdampfer handeln, bei dem kältemittelseitig parallel geschaltete Flachrohre sich zwischen zwei Sammelrohren erstrecken und zwischen den Flachrohren wärmeableitende Wellrippen vorgesehen sind. Ein solcher Verdampfer ist beispielsweise aus der DE 197 29 497 A1 bekannt.

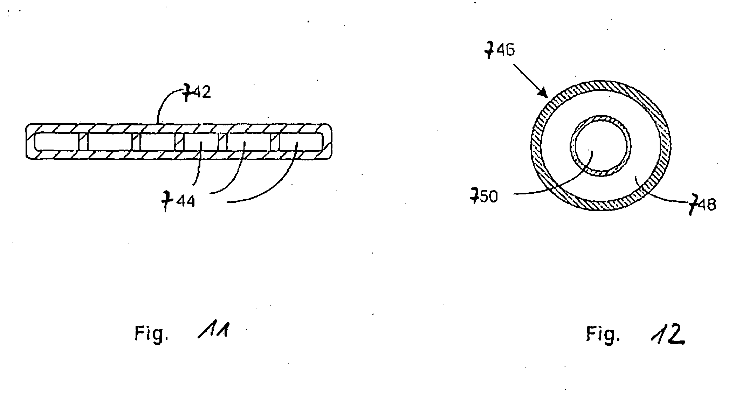

Der zweite Verdampfer 232 kann ähnlich wie der erste Verdampfer 222 aufgebaut sein, jedoch enthält dieser Verdampfer zusätzlich ein Kältespeichermedium, das beispielsweise in den einzelnen Rohren des Verdampfers enthalten sein kann. Diese Rohre können beispielsweise als Mehrkanalflachrohre 742 ausgebildet sein gemäß Figur 11, wobei in einigen der Kanäle 744 das Kältespeichermedium gelagert sein kann und in den anderen der Kanäle 744 das Kältemittel strömt. In einer alternativen Ausführungsform können die Verdampferrohre 746 auch als koaxiale Rohre ausgebildet sein, wobei beispielsweise in dem Außenrohr 748 das Kältespeichermedium gespeichert werden kann und in dem Innenrohr 750 das Kältemittel strömen kann, siehe Figur 12

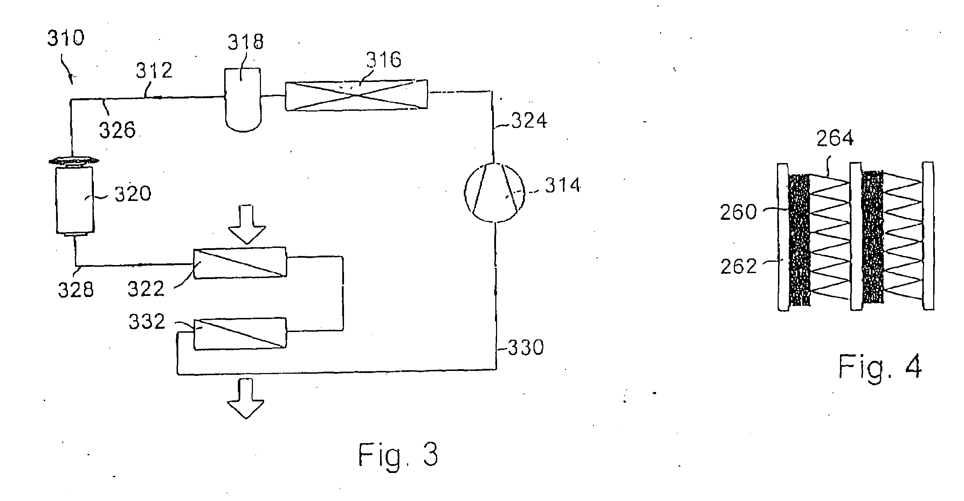

Gemäß einer in Fig. 4 schematisch dargestellten alternativen Ausführungsform kann das Kältespeichermedium in einem Rohr 260 oder Behälter zwischen einem Verdampferrohr 262 und einer wärmeableitenden Rippe 264 in den Verdampfer eingebunden sein.

Der zweite Verdampfer 232 kann somit Kälteleistung über das Kältespeichermedium speichern, so dass dieser Verdampfer im folgenden Speicherverdampfer genannt wird und eine Integration von Kältespeicher und Verdampfer bildet. Als Kältespeichermedium kann beispielsweise Decanol oder Tetradecan eingesetzt werden. Das Kältespeichermedium sollte vorteilhafterweise einen Phasenwechsel bei ca. 3 °C bis 10 °C haben, vorzugsweise 3 °C bis 5 °C.

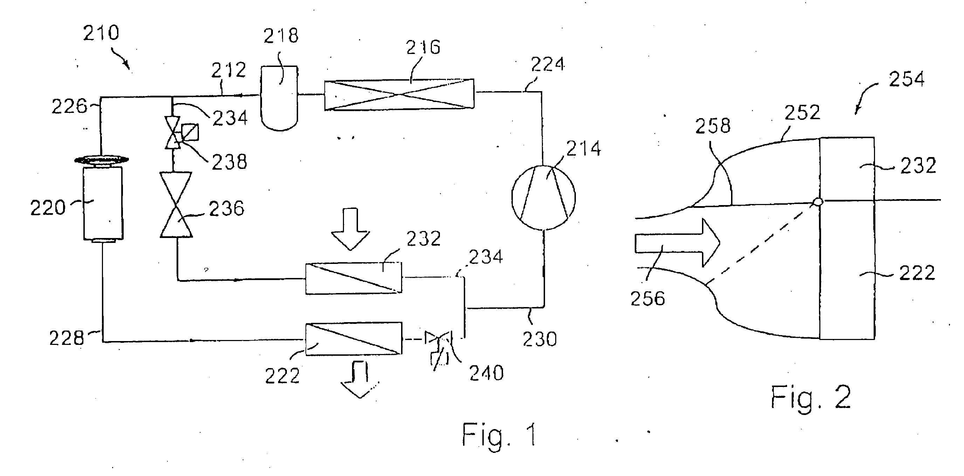

In Fig. 2 ist dargestellt, wie die beiden Verdampfer 222 und 232 in einem Klimagerät zur Abkühlung der Luft eingesetzt werden könnten. Die Verdampfer 222 und 232 sind in einem Luftführungsgehäuse 252 des Klimageräts 254 in bekannter Weise angeordnet. Derartige Klimageräte befinden sich in der Regel in der Instrumententafel des Kraftfahrzeugs. Über ein nicht näher dargestelltes Gebläse kann Luft in Pfeilrichtung 256 durch die Verdampfer 222 und 232 gefördert werden. Der luftseitig hinter den Verdampfern anschließende Teil des Klimageräts 254, in dem in der Regel ein Heizkörper und verschiedene Luftklappen und Luftkanäle zu den einzelnen Luftauslässen angeordnet sind, ist in Fig. 2 nicht weiter dargestellt. Luftseitig vor den Verdampfern 222 und 232 ist ein Luftstrom-steuerelement 258 derart angeordnet, dass in der einen Endstellung des Luftstromsteuerelements 258 die Luft durch den ersten Verdampfer 222 geführt wird und in der anderen Endstellung (gestrichelte Linie in Fig. 2) die Luft durch den zweiten Verdampfer 232 geführt wird. Hierbei wird der jeweils nicht von der Luft durchströmte Verdampfer 222 bzw. 232 von dem Luftstromsteuerelement 258 abgesperrt.

Im stationären Zustand, also wenn der Motor in Betrieb ist, wird die Luft durch den ersten Verdampfer 222 geleitet und der zweite Verdampfer 232 ist luftseitig abgesperrt. Der zweite Verdampfer 232 wird jedoch vom Kältemittel durchströmt und so kann das Kältespeichermedium einfrieren.

Beim Stillstand des Motors (Idie-Stop-Betrieb), womit auch der Kompressor 214 außer Betrieb ist, wird, um den Innenraum des Kraftfahrzeugs weiter kühlen zu können, die Luft durch den zweiten Verdampfer 232 geleitet, wobei das Kältespeichermedium die "Kälte" an die Luft abgibt.

Neben den beiden o.g. Endstellungen des Luftsteuerelements 258 kann dieses eine weitere Stellung einnehmen, in der die Luft sowohl durch den ersten Verdampfer 222 als auch durch den zweiten Verdampfer 232 geleitet wird, so dass die maximale Kälteleistung zur Verfügung steht. Diese Stellung wird dann eingenommen, wenn die maximale Kälteleistung im Pull-down-Betrieb benötigt wird.

Gemäß dem in Fig. 3 dargestellten weiteren Ausführungsbeispiel, bei dem gleiche oder gleichwirkende Bauteile mit um 100 erhöhten Bezugszeichen versehen sind, sind bei einer Klimaanlage 310 zwei Verdampfer 322 und 332 in einem Kühlmittelkreislauf 312 in Reihe geschaltet, so dass der Kühlmittelkreislauf 312 lediglich einen Kompressor 314, einen Kältemittelkondensator 316, einen Kältemittelsammler 318, ein Expansionsventil 320 und den ersten Verdampfer 322 und den zweiten Verdampfer 332 aufweist, die über Kältemittelleitungen 324, 326, 328, 330 miteinander verbunden sind. Hierbei ist im Kühlmittelkreislauf 312 der zweite Verdampfer 332, welcher mit Hilfe eines Kältespeichermediums Kälte speichern kann, dem ersten Verdampfer 322 nachgeschaltet. Er kann aber auch dem Verdampfer 322 kältemittelseitig vorgeschattet sein. Als Kältespeichermedien können die gleichen Medien verwendet werden, wie beim ersten Ausführungsbeispiel.

Die Führung der zu kühlenden Luft durch die beiden Verdampfer 322 und 332 entspricht der des ersten Ausführungsbeispiels.

In den dargestellten Ausführungsbeispielen ist ein erster Verdampfer 222 bzw. 322 und ein zweiter Verdampfer 232 bzw. 332 vorgesehen. In einer weiteren Ausführungsform, die nicht näher dargestellt ist, können die beiden Verdampfer 222 bzw. 322 und 232 bzw. 332 aber auch eine gemeinsame Baueinheit bilden, so dass es sich dann um einen einzigen Verdampfer mit zwei Teilbereichen handelt, wobei der erste Teilbereich dem Verdampfer 222 bzw. 322 entspricht und lediglich kältemittelverdampfende Eigen-schaften hat und der zweite Teilbereich dem Speicherverdampfer entspricht und zusätzlich das Kältespeichermedium enthält. Dieser zweite Teilbereich kann das Kältespeichermedium wie bereits der Speicherverdampfer 232 bzw. 332 in seinen einzelnen Verdampferrohren aufweisen oder aber den anderen o.g. Ausführungsbeispielen entsprechen.

Somit ist mit der Erfindung eine Klimaanlage geschaffen, bei der in einem einzigen Klimagerät, das keinen wesentlich größeren Bauraum einnimmt als bisher bekannte Klimageräte, zwei Verdampfer 222 und 232 bzw. 322 und 332 bzw. ein Verdampfer mit zwei Teilbereichen angeordnet ist, mit den erwähnten Eigenschaften, so dass mit dieser Klimaanlage sowohl während der Fahrt als auch bei zeitweilig ausgeschaltetem Motor im Idie-stop-Betrieb eine Abkühlung und damit Klimatisierung der Luft möglich ist.

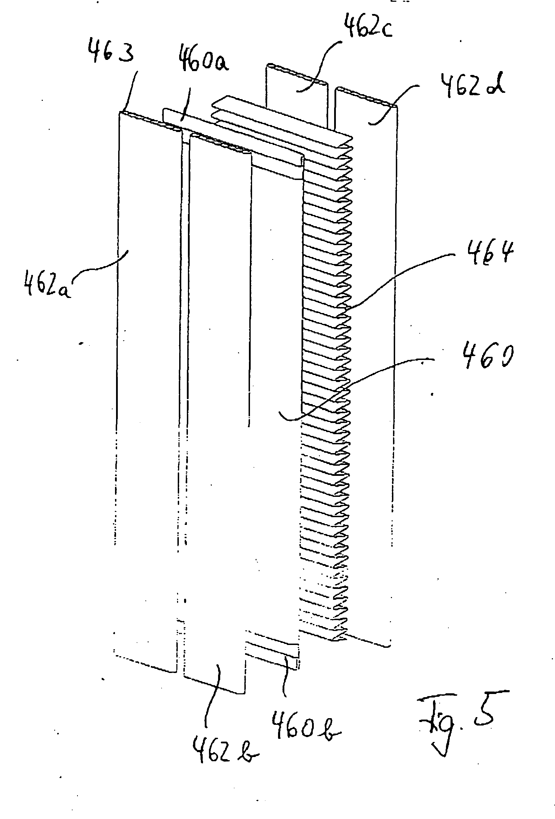

Die Figur 5 zeigt eine Anordnung von Bauteilen eines Verdampfers, wie beispielsweise eines Flachrohrverdampfers. Die Flachrohre 462a bis 462d sind im Ausführungsbeispiel jeweils paarweise angeordnet, so daß zwei Flachrohre 462a und 462b und ebenso die Flachrohre 462c und 462d jeweils eine Reihe bilden, in Luftströmungsrichtung betrachtet. Es kann statt der jeweils zwei Flachrohre oder anderer Kältemittelrohre aber auch nur ein Flachrohr oder Kältemittelrohr je Reihe, in Luftströmungsrichtung betrachtet, vorgesehen sein oder auch eine Mehrzahl von Flachrohren oder Kältemittelrohren. Die Flachrohre weisen zweckmäßiger Weise eine Vielzahl von einzelnen Kanälen 463 auf, durch die das Kältemittel im Betrieb des Verdampfers strömt. Die Kältemittelrohre oder Flachrohre sind an ihren Enden jeweils mit Sammelrohrabschnitten verbunden und die Kanäle 463 stehen mit diesen Sammelrohrabschnitten in Fluidverbindung.

Zwischen zwei Reihen von Flachrohren ist vorteilhaft zumindest ein Speicher 460 für ein Kältespeichermedium angeordnet Vorteilhaft kann es dabei sein, wenn der zumindest eine Speicher im wesentlichen die gleiche Bauhöhe und Tiefe aufweist, wie die pro Reihe verwendeten Kältemittelrohre oder wie der Verdampfer selbst. Bei einem anderen Ausführungsbeispiel kann es aber auch zweckmäßig sein, wenn der Speicher in seiner Tiefe und/oder Höhe eine geringere oder größere Ausdehnung aufweist, im Vergleich zu den Kältemittelrohren oder dem Verdampfer selbst.

Vorteilhaft ist es, wenn dieser zumindest eine Speicher 460 an einer Seite an einem oder mehreren Flachrohren 462a, 462b anliegt oder mit diesem zumindest einen Flachrohr gar einstückig verbunden ist oder vorteilhaft mit diesem zumindest einen Flachrohr einteilig ausgebildet ist. Der Speicher kann dabei im wesentlichen die gleiche Ausdehnung aufweisen, wie die Flachrohre oder im wesentlichen die Ausdehnung des Verdampfers in der Tiefe aufweisen. Im Ausführungsbeispiel der Figur 5 ist der Speicher aus einem Flachrohr gebildet, das an seinen beiden Enden 460a und 460b verschlossen ist. Dieses Verschließen kann beispielsweise durch eine Falzung oder ein anderes Verfahren, wie durch Verlöten oder Verwendung eines Verschlusses, wie eines Verschlußstopfens, erfolgen.

Weiterhin kann zwischen zwei Reihen von Flachrohren eine wärmeableitende Rippe 464 vorgesehen sein. Zweckmäßig ist es, wenn diese Rippe 464 auf einer Seite des Flachrohres zwischen Flachrohr und Speicher angeordnet ist.

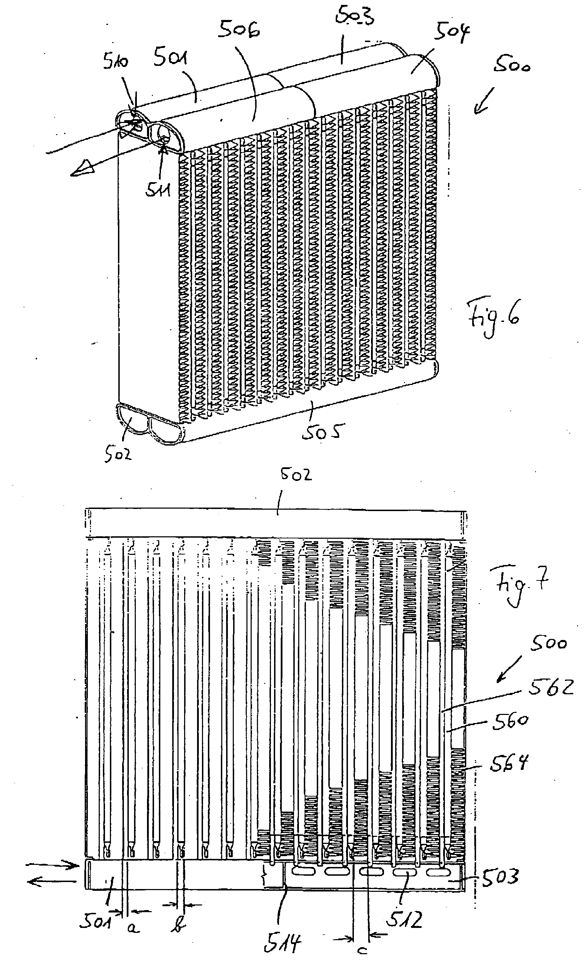

Die Figur 6 zeigt einen Verdampfer, wie einen Flachrohrverdampfer, 500 in einer dreidimensionalen Ansicht und die Figur 7 zeigt einen Verdampfer in einer zweidimensionalen Ansicht. Der Verdampfer, oder auch Speicherverdampfer, 500 weist dabei einen Reihe von Flachrohren, Speicher und Rippen auf, die gemäß der Figur 5 angeordnet sind. Weiterhin weist der Verdampfer Sammelrohrabschnitte 501 bis 506 auf, die jeweils mit zumindest einem Teil der Flachrohre als Kältemittelleitungen in Fluidverbindung stehen. Das Kältemittel strömt im Bereich der Einlassöffnung 510 in dem Verdampfer 500 ein und im Bereich der Einlassöffnung 511 wieder heraus. Das Kältemittel tritt durch die Öffnung 510 in den Sammelrohrabschnitt 501 ein, gelangt von dort über die Kältemittelkanäle in Flachrohren in den Sammelrohrabschnitt 502 und von dort durch Kältemittelkanäle in Flachrohren in den Sammelrohrabschnitt 503. Von dort tritt das Kältemittel durch zumindest eine Verbindung 512 in den Sammelrohrabschnitt 504. Von dort gelangt das Kältemittel durch Kanäle in Flachrohren in den Sammelrohrabschnitt 505 um durch Kanäle wieder in den Sammelrohrabschnitt 506 zu gelangen. Anschließend tritt das Kältemittel an der Öffnung 511 wieder aus. Zwischen den Sammelrohrabschnitten 501 und 503 bzw. 504 und 506 sind Trennwände 514 vorgesehen, die die einzelnen Bereiche voneinander trennen. Die Flachrohre des Verdampfers 500 sind mit 562 bezeichnet. Zwischen den Reihen von Flachrohren sind Speicher 560 und Rippen 564 angeordnet. Zur besseren Darstellung sind nicht alle Rippen eingezeichnet und teilweise sind die Rippen auch nur Teilweise dargestellt.

Gemäß dem Ausführungsbeispiel der Figuren 6 oder 7 sind an beiden Enden der Kältemittelrohre Sammelrohrabschnitte angeordnet. Bei einem anderen vorteilhaften Ausführungsbeispiel kann es zweckmäßig sein, wenn Sammelrohrabschnitte nur auf einer Seite der Kältemittelrohre angeordnet sind, so daß an dem anderen Ende der Kältemittelrohre jeweils eine Umlenkung vorhanden ist. Diese Umlenkung kann beispielsweise im Rohr selbst erfolgen.

Zweckmäßig ist es, wenn die Flachrohre bzw. Kältemittelrohre eine Ausdehnung a quer zur Luftströmungsrichtung haben, die im Bereich von ca. 1mm bis 5mm, vorzugsweise von 1,5 mm bis 3mm liegt. Weiterhin ist es vorteilhaft, wenn die Ausdehnung b des Speichers quer zur Luftströmungsrichtung im Bereich von 1 mm bis 10mm, vorzugsweise von 1,5 mm bis 6 mm liegt. Auch ist es zweckmäßig, wenn die Ausdehnung c der Rippen quer zur Luftströmung durch den Verdampfer im Bereich von 3 mm bis 12mm, vorzugsweise von 4mm bis 10mm liegt. Vorteilhaft ist es auch, wenn das Verhältnis der Breite der Speicher zu der Breite der Kältemittelrohre im Bereich von 0,25 bis 2, vorzugsweise im Bereich von 0,5 bis 1,5 liegt.

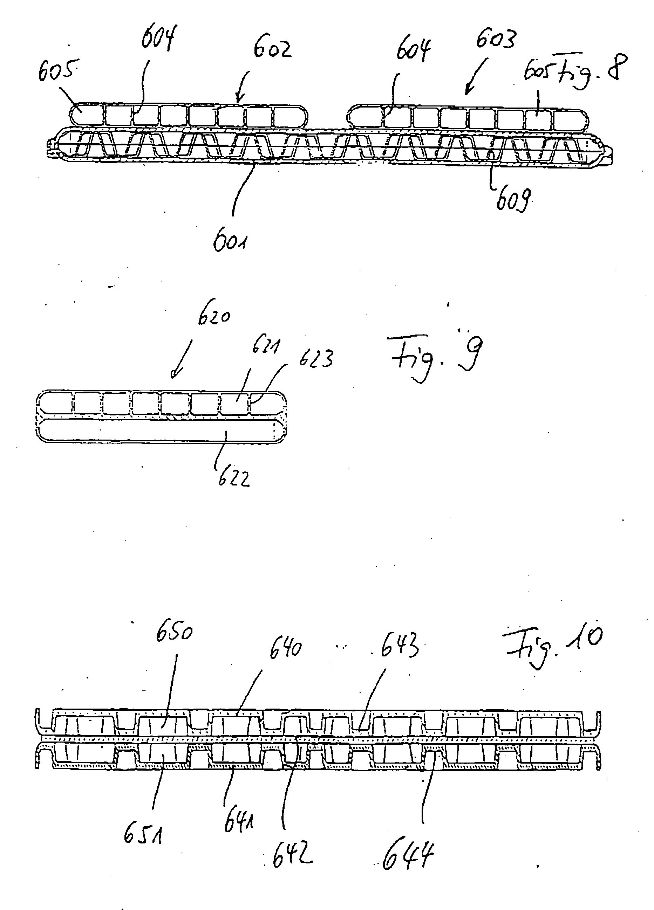

Die Figur 8 zeigt einen Schnitt durch einen Speicher 601 für Kältespeichermedium und zwei Flachrohre 602, 603, die mit dem Speicher 601 verbunden sind. Die Flachrohre sind beispielsweise als extrudierte Flachrohre ausgebildet und weisen eine Mehrzahl von Kanälen 605 auf, die jeweils für sich eine Fluidverbindung zwischen den Endbereichen des Flachrohres gewährleisten. Die Kältemittefkanäle 605 sind beispielsweise durch Stege 604 voneinander getrennt. Die Kanäle 605 sind beispielsweise rechteckig, vieleckig, wie beispielsweise dreieckig oder fünfeckig, oval oder rund im Querschnitt.

Die Flachrohre 602 und 603 sind auf dem Speicher 601 befestigt, wie einstückig ausgebildet. Gemäß der Erfindung können die beiden Flachrohre auch zu einem Flachrohr verbunden sein oder statt zweier Flachrohre können auch ein oder mehrere Flachrohre verwendet werden. Auch können erfindungsgemäß eine Mehrzahl von Speichern bzw. Speicherrohren nebeneinander verwendet werden. Weiterhin zeigt der Speicher 601 in seinem Innenraum eine mechanische Abstützung 609, durch ein entsprechend ausgebildetes Stützelement, wie beispielsweise Stützblech, das in den Speicherinnenraum eingeschoben werden kann. Dieses dient der mechanischen Verstärkung bzw. Abstützung. Vorteilhaft ist es, wenn dieses Stützelement durch tiefgezogene Bereiche oder abgewinkelte Bereiche verstärkt sind.

Die Figur 9 zeigt eine beispielhafte Ausführungsform eines Speichers mit einem Flachrohr, die einteilig ausgebildet sind. Der Speicher 622 ist mit dem Flachrohr 620 einteilig hergestellt. Der Flachrohrteil ist mit Kanälen 621 ausgebildet und diese sind durch die Stege 623 von einander getrennt. Der Speicher 622 bildet somit quasi einen Teil eines Doppelrohres. Der Speicher als Kammer für das Speichermedium kann beispielsweise durch einen Verschlussstopfen verschlossen werden.

Die Figur 10 zeigt eine weitere vorteilhafte Ausführungsform eines Speicherverdampferbauteiles in Scheibenbauweise. Die Kanäle für das Kältemittel und die Kammer für das Speichermedium werden jeweils durch eine Scheibe 640 und gegebenenfalls eine Zwischenscheibe 642 bzw. durch die Scheibe 641 und die Zwischenscheibe 642 gebildet. Durch die Ausgestaltung der Scheiben 640 und 641 durch Tiefziehen entsteht zwischen den Scheiben 640 und 641 jeweils mit Teil 642 ein Raumbereich, der entweder als Kanäle oder als Kammer nutzbar ist. Durch das Tiefziehen können noch Stege oder Rippen oder Noppen oder Näpfe ausgebildet sein, die der Verstärkung bzw. der Abstützung dienen. Die einzelnen Bauteile werden derart miteinander verbunden, daß die Zwischenräume als Kältemittelkanäle 650 und als Speichervolumen 651 fluiddicht abgeschlossen sind. In Anschlußstellen können dann die Kanäle an den Kältemittelkreis angeschlossen sein oder die Kammer mit dem Kältespeichermittel befüllt werden. Die Konstruktion eines Verdampfers in Scheibenbauweise kann für manche Anwendungsfälle vorteilhaft sein. Die Kältemittelkanäle in Scheibenbauweise stellen somit auch ein Kältemittelrohr im Sinne der vorliegenden Beschreibung dar, das durch den Aufbau und durch die Verwendung von zumindest einzelnen Scheiben charakterisiert ist, wobei durch zumindest zwei Scheiben zumindest ein Kältemittelkanal erzeugt wird.

Die Kältespeicher des Verdampfers oder Wärmetauschers können jeweils mittels zumindest einer Verbindungsleitungen miteinander verbunden/verbindbar sein, worüber sie beispielsweise auch befüllbar und/oder entlüftbar sind. Auch können zumindest einzelne Speicher mit einem Vorratsbehälter, wie Vorratstank, verbunden sind, so daß das Speichermedium ausgehend von diesem Vorratstank in die Speicher befüllbar ist. Im Betrieb des Wärmetauschers kann dann dieser Vorratsbehälter verschlossen oder wieder zu öffnen sein und gegebenenfalls auch wieder verschließbar sein.

Besonders zweckmäßig ist es, daß die Verwendung eines Kältespeichermediums derart erfolgt, daß die verwendete Menge des Mediums dazu ausreicht, die nötige Kühlleistung für einen Zeitraum von ca. 30 bis 120 Sekunden, vorzugsweise von ca. 60 Sekunden auch bei ausgeschaltetem Kompressorantrieb zu gewährleisten. Bei Verwendung von Decanol oder Tetradekan als Kältespeichermedium entspricht dies etwa einer verwendeten Menge von ca. 200 ml über ca. 500ml bis ca. 1000 ml.

### Bezugszeichenliste

- 210, 310: Klimaanlage
- 212, 312: Kühlmiftelkreislauf
- 214, 314: Kompressor
- 216,316:
- 218, 318: Kältemittelsammler
- 220, 320: Expansionsventil
- 222, 322: erster Verdampfer
- 224, 226, 228, 230, 324, 326, 328, 330: Kältemittelleitungen
- 232, 332: zweiter Verdampfer
- 232, 332: Speicherverdampfer
- 234: Kältemittelleitung
- 236: Expansionsorgan
- 238: Absperrventil
- 240: Absperrventil
- 252: Luftführungsgehäuse
- 254: Klimagerät
- 256: Pfeilrichtung
- 258: Luftstromsteuerelement
- 260: Rohr
- 262: Verdampferrohr
- 264: Rippe
- 460: Speicher für Kältespeichermedium
- 460a, 406b: Verschluß
- 462a, 462b, 462c, 462d: Kältemittelrohre
- 463: Kältemittelkanäle
- 464: Rippen
- 500: Verdampfer
- 501, 502, 503, 504, 505, 506: Sammelrohrabschnitte
- 510: Einlassöffnung
- 511: Auslassöffnung
- 512: Verbindung
- 514: Trennwand
- 560: Speicher
- 562: Kältemittelrohr
- 564: Rippen
- 601: Speicher
- 602, 603: Kältemittelrohr
- 604: Steg
- 605: Kältemittelkanal
- 609: Abstützung
- 620: Kombination von Kältemittelrohr und Speicher
- 621: Käitemittelkanal
- 622: Speicher
- 623: Steg
- 640: Scheibe
- 641: Scheibe
- 642: Zwischenscheibe
- 643: Stege
- 644: Noppen
- 650: Kältemittelkanäle
- 651: Speichervolumen
- 742: Mehrkanalflachrohr
- 744: Kanäle
- 746: Verdampferrohr
- 748: Außenrohr
- 750: Innenrohr

## Patentansprüche

1. Verdampfer (500) mit einem Einlass für Kältemittel und einem Auslass für Kältemittel, wobei Sammelrohrabschnitte (501, 502,503,504,505,506) vorgesehen sind und ein Sammelrohrabschnitt mit dem Einlass (510) in Verbindung steht und ein Sammelrohrabschnitt (501,502,503,504,505,506) mit dem Auslass (511) in Verbindung steht, mit zumindest zwischen den Sammelrohrabschnitten (501,502,503,504,505,506) vorgesehenen Kältemittelrohren (462a,462b) mit Kältemittelkanälen (463), mit Rippen (464) zur Durchströmung von Luft, wobei zumindest einzelne Kältemittelrohre (462a,462b) mit zumindest einem Speicher (460) für Kältespsichermedium in thermischer Verbindung stehen.

2. Verdampfer nach Anspruch 1, **dadurch gekennzeichnet, dass** zumindest ein Kältemittelrohr (462a,462b) derart angeordnet ist, daß zumindest auf der einen Seite des Kältemittelrohrs(462a,462b) ein Speicher (460) für ein Kältespeichermedium angeordnet ist.

3. Verdampfer nach Anspruch 2, **dadurch gekennzeichnet, dass** ein Speicher (460) nur einseitig des Kältemittelrohrs (462a,462b) angeordnet ist.

4. Verdampfer nach Anspruch 2, **dadurch gekennzeichnet, dass** Speicher (460) beidseitig des Kältemlttelrohrs (462a,462b) angeordnet sind.

5. Verdampfer nach einem der Ansprüche 2 bis 4, **dadurch gekennzeichnet, dass** der Speicher (460) an seiner einen Seitenfläche mit dem Kältemittelrohr (462a,462b) in Verbindung steht und auf der anderen seiner Seitenflächen mit einer Rippe (464) in Verbindung steht.

6. Verdampfer nach einem der Ansprüche 2 bis 4, **dadurch gekennzeichnet, daß** das Kältemittelrohr (462a,462b) an seiner einen Seitenfläche mit einem Speicher (460) in Verbindung steht und auf der anderen seiner Seitenflächen mit einer Rippe (464) in Verbindung steht.

7. Verdampfer nach einem der Ansprüche 1 bis 6, **dadurch gekennzeichnet, dass** die Bauteile des Wärmetauschers in Richtung quer zur Luftsrömungsrichtung durch den Wärmetauscher **g**e**kennzeichnet ist durch** die Reihenfolge der Anordnung: Kältemittelrohr, (462a,462b) Speicher (460), Rippe (464), Kältemittelrohr (462a,462b), Speicher (460), Rippe (464).

8. Verdampfer nach einem der Ansprüche 1 bis 6, **dadurch gekennzeichnet, dass** die Bauteile des Wärmetauschers in Richtung quer zur Luftsrömungsrichtung durch den Wärmetauscher **gekennzeichnet ist durch** die Reihenfolge der Anordnung: Kältemittelrohr (462a,462b), Speicher (460), Rippe (464), Speicher (460), Kältemittelrohr (462a,462b), Speicher (460), Rippe (464), Speicher (460), Kältemittelrohr (462a,462b).

9. Verdampfer nach einem der Ansprüche 1 bis 6, **dadurch gekennzeichnet, dass** die Bauteile des Wärmetauschers in Richtung quer zur Luftströmungsrichtung durch den Wärmetauscher **gekennzeichnet ist durch** die Reihenfolge der Anordnung: Kältemittelrohr (462a,462b), Rippe (464), Speicher (460), Rippe (464), Kältemittelrohr (462a,462b), Rippe (464), Speicher (460), Rippe (464), Kältemittelrohr (462a,462b).

10. Verdampfer nach einem der vorhergehenden Ansprüche, **dadurch gekennzeichnet, dass** zumindest ein Speicher (460) und zumindest ein Kältemittelrohr (462a,462b) miteinander verbunden sind.

11. Verdampfer nach einem der vorhergehenden Ansprüche, **dadurch gekennzeichnet, dass** zumindest ein Speicher (460) und zumindest ein Kältemittelrohr (462a,462b) einteilig ausgebildet sind.

## Claims

1. An evaporator (500) comprising an inlet for refrigerant, and an outlet for refrigerant, wherein manifold sections (501, 502, 503, 504, 505, 506) are provided, and one manifold section is connected to the inlet (510), and one manifold section (501,502,503,504,505,506) is connected to the outlet (511), comprising - at least between the manifold sections (501,502,503,504,505,506) - refrigerant tubes (462a,462b) having refrigerant ducts (463) and fins (464) for air to flow between, wherein at least individual refrigerant tubes (462a,462b) are thermally connected to at least one accumulator (460) for cold accumulator medium.

2. The evaporator according to claim 1, **characterised in that** at least one refrigerant tube (462a,462b) is disposed such that an accumulator (460) for a cold accumulator medium is disposed at least on one side of the refrigerant tube (462a,462b).

3. The evaporator according to claim 2, **characterized in that** an accumulator (460) is disposed on only one side of the refrigerant tube (462a,462b).

4. The evaporator according to claim 2, **characterised in that** accumulators (460) are disposed on both sides of the refrigerant tube (462a,462b).

5. The evaporator according to one of the claims 2 to 4, **characterized in that** the accumulator (460) is connected on one literal surface thereof to the refrigerant tube (462a,462b), and is connected on the other lateral surface thereof to a fin (464).

6. The evaporator according to one of the claims 2 to 4, **characterized in that** the refrigerant tube (462a,462b) is connected on one lateral surface thereof to an accumulator (460), and is connected on the other lateral surface thereof to a fin (464).

7. The evaporator according to one of the claims 1 to 6, **characterized in that** the components of the heat exchanger in the direction transversely to the direction of air flow through the heat exchanger is **characterized by** the order of placement: refrigerant tube (462a, 462b), accumulator (460), fin (464), refrigerant tube (462a,462b), accumulator (460), fin (464).

8. The evaporator according to one of the claims 1 to 6, **characterized in that** the components of the heat exchanger in the direction transversely to the direction of air flow trough the heat exchanger is **characterized by** the order of placement: refrigerant tube, (462a,462b), accumulator (460), fin (464), accumulator (460), refrigerant tube (462a, 462b) accumulator (460), fin (464), accumulator (460), refrigerant tube (462a,462b).

9. The evaporator according to one of the claims 1 to 6, characterised is that the components of the heat exchanger in the direction transversely to the direction of air flow through the heat exchanger is **characterized by** the order of placement: refrigerant tube (462a, 462b), fin (464), accumulator (460), fin (464), refrigerant tube (462a,462b), fin (464), accumulator (464), fin (464), refrigerant tube (462a,462b).

10. The evaporator according to one of the preceding claims, **characterized in that** at least one accumulator (460) and at least one refrigerant tube (462a,462b) are interconnected.

11. The evaporator according to one of the preceding claims, **characterized in that** ant least one accumulator (460) and at least one refrigerant tube (462a,462b) are designed as a single piece.

## Revendications

1. Evaporateur (500) comprenant une entrée pour du fluide frigorigène et une sortie pour du fluide frigorigène, où il est prévu des parties de tubes collecteurs (501, 502, 503, 504, 505, 506), et une partie de tube collecteur communique avec l'entrée (510), et une partie de tube collecteur (501, 502, 503, 504, 505, 506) communique avec la sortie (511), comprenant au moins des tubes de fluide frigorigène (462a, 462b) comportant des conduits de fluide frigorigène (463) et prévus entre les parties de tubes collecteurs (501, 502, 503, 504, 505, 506), comprenant des ailettes (464) servant à la circulation d'air, où au moins différents tubes de fluide frigorigène (462a, 462b) sont en liaison thermique avec au moins un accumulateur (460) pour un milieu de l'accumulateur de froid.

2. Evaporateur selon la revendication 1, **caractérisé en ce qu'**au moins une tube de fluide frigorigène (462a, 462b) est disposé de manière telle, qu'un accumulateur (460) pour un milieu de l'accumulateur de froid soit disposé au moins sur l'un des côtés du tube de fluide frigorigène (462a, 462b).

3. Evaporateur selon la revendication 2, **caractérisé en ce qu'**un accumulateur (460) est disposé seulement sur un côté du tube de fluide frigorigène (462a, 462b).

4. Evaporateur selon la revendication 2, **caractérisé en ce que** des accumulateurs (460) sont disposés des deux côtés du tube de fluide frigorigène (462a, 462b).

5. Evaporateur selon l'une quelconque des revendications 2 à 4, **caractérisé en ce que** l'accumulateur (460), sur l'une de ses surfaces latérales, communique avec le tube de fluide frigorigène (462a, 462b) et, sur l'autre de ses surfaces latérales, communique avec une ailette (464).

6. Evaporateur selon l'une quelconque des revendications 2 à 4, **caractérisé en ce que** le tube de fluide frigorigène (462a, 462b), sur une de ses surfaces latérales, communique avec un accumulateur (460) et, sur l'autre de ses surfaces latérales, communique avec une ailette (464).

7. Evaporateur selon l'une quelconque des revendications 1 à 6, **caractérisé en ce que** les composants de l'échangeur de chaleur, suivant une direction transversale par rapport à la direction d'écoulement de l'air à travers l'échangeur de chaleur, sont **caractérisés par** l'agencement comprenant successivement : tube de fluide frigorigène (462a, 462b), accumulateur (460), ailette (464), tube de fluide frigorigène (462a, 462b), accumulateur (460), ailette (464).

8. Evaporateur selon l'une quelconque des revendications 1 à 6, **caractérisé en ce que** les composants de l'échangeur de chaleur, suivant une direction transversale par rapport à la direction d'écoulement de l'air à travers l'échangeur de chaleur, sont **caractérisés par** l'agencement comprenant successivement : tube de fluide frigorigène (462a, 462b), accumulateur (460), ailette (464), accumulateur (460), tube de fluide frigorigène (462a, 462b), accumulateur (460), ailette (464), accumulateur (460), tube de fluide frigorigène (462a, 462b).

9. évaporateur selon l'une quelconque des revendications 1 à 6, **caractérise en ce que** les composants de l'échangeur de chaleur, suivant une direction transversale par rapport à la direction d'écoulement de l'air à travers l'échangeur de chaleur, sont **caractérisés par** l'agencement comprenant successivement ; tube de fluide frigorigène (4,62a, 462b), ailette (464), accumulateur (460), ailette (464), tube de fluide frigorigène (462a, 462b), ailette (464), accumulateur (460), ailette (464), tube de fluide frigorigène (462a, 462b).

10. Evaporateur selon l'une quelconque des revendications précédentes, **caractérisé en ce qu'**au moins une accumulateur (460) et au moins un tube de fluide frigorigène (462a, 462b) sont raccordés l'un à l'autre.

11. évaporateur selon l'une quelconque des revendications précédentes, **caractérisé en ce qu'**au moins un accumulateur (460) et au moins un tube de fluide frigorigène (462a, 462b) sont configurés en formant une seule et même pièce.
